# EUROPEAN PATENT APPLICATION

(11) **EP 4 647 197 A1**
(43) Date of publication of application: **12.11.2025**
(21) Application number: 25165797.9
(22) Date of filing: 24.03.2025
(51) Int. Cl.: B23H 7/28, B23H 1/04

(54) **MICROMIXER TUBE REPAIR EDM ELECTRODE, SYSTEM AND METHOD**

(30) Priority: 18.04.2024 US 202418638838
(71) Applicant: GE Vernova Technology GmbH, 5400 Baden (CH)
(72) Inventor: KELLER, Jesse Lee, Greenville, 29615 (US); BELLINO, Mark Carmine, Greenville, 29615 (US)
(74) Representative: Freigutpartners IP Law Firm

(57) **Abstract**

A tool electrode for an EDM system for repairing a micromixer tube of a combustor, the EDM system and a related method, are provided. The tool electrode includes an elongated member; and a disk having a first side, a second side, an opening in a center thereof, and a slot extending from the first side to the second side and from the opening to an outer periphery of the disk. The elongated member is coupled to the disk and extends through the opening from the first side of the disk and beyond the second side of the disk. The disk is used to remove a damaged end portion of a micromixer tube from within the tube, and without debris damaging the tube or a cutting tool damaging other tubes in a set of micromixer tubes.

## Description

### TECHNICAL FIELD

The disclosure relates generally to combustor repair. More specifically, the disclosure relates to an electrical discharge machining (EDM) tool electrode, system and method to repair a micromixer tube in a set of micromixer tubes of a combustor.

### BACKGROUND

Gas turbine (GT) systems combust a fuel to form a combustion gas stream that is converted to kinetic energy. Combustors in certain GT systems use a micromixer that includes a plurality of micromixer tubes to mix fuel and air. The micromixer tubes are arranged in segments within a circular head end assembly of the combustor. Each segment includes a plurality of closely spaced micromixer tubes, many of which are positioned inwardly of other micromixer tubes. During use, the tips of certain micromixer tubes may experience damage, e.g., excessive burning or oxidation. The repair of these damaged micromixer tubes includes removing and replacing the end portion or tip of the micromixer tube. Where the damaged micromixer tubes are along the perimeter of the segment, the process of removal and replacement is relatively simple and can be carried out using conventional machining technologies, e.g., a cutting tool and a welder system. In some cases, however, where the damaged micromixer tube(s) are inward of other, outer micromixer tubes, they are not readily repairable without removing or damaging the end portions of the other, perhaps undamaged, outer micromixer tubes. Vibration from the repair tools can cause damage to brazed joints in other portions of the micromixer. In addition, the physical cutting of the end portion can result in debris, such as chips or shavings, that can clog or impede various flow passages in the micromixer tubes or otherwise damage the micromixer tubes. The current approach removes and replaces all of the other micromixer tubes regardless of damage thereto, which adds time and expense to the repairs.

### BRIEF DESCRIPTION

All aspects, examples and features mentioned below can be combined in any technically possible way.

An aspect of the disclosure provides a tool electrode for an electrical discharging machine (EDM) system for repairing a micromixer tube of a combustor, the tool electrode comprising: an elongated member; and a disk having a first side, a second side, an opening in a center thereof, and a slot extending from the first side to the second side and from the opening to an outer periphery of the disk, wherein the elongated member is coupled to the disk and extends through the opening from the first side of the disk and beyond the second side of the disk.

Another aspect of the disclosure includes any of the preceding aspects, and the outer periphery of the disk is serrated.

Another aspect of the disclosure includes any of the preceding aspects, and the outer periphery of the disk includes a concavity extending inwardly in a radial direction.

Another aspect of the disclosure includes any of the preceding aspects, and at least one of the first side and the second side of the disk is thicker at a radial outer portion thereof adjacent the concavity than at a radial inner portion thereof.

Another aspect of the disclosure includes any of the preceding aspects, and at least one of the first side and the second side of the disk is thicker at a radial outer portion thereof than at a radial inner portion thereof.

Another aspect of the disclosure includes any of the preceding aspects, and the disk includes a dielectric liquid flow passage defined therein.

Another aspect of the disclosure includes any of the preceding aspects, and the disk has an outer diameter in a range of 90% to 95% of an inner diameter of the micromixer tube.

Another aspect of the disclosure includes any of the preceding aspects, and the elongated member is configured to couple to a power supply of an EDM system.

Another aspect of the disclosure includes an electrical discharging machine (EDM) system for removing an end portion of a micromixer tube of a combustor, the EDM system comprising: a tool electrode including: an elongated member; and a disk having a first side, a second side, an opening in a center thereof, and a slot extending from the first side to the second side and from the opening to an outer periphery of the disk, wherein the elongated member is coupled to the disk and extends through the opening from the first side of the disk and beyond the second side of the disk; a power supply operatively coupled to deliver an repeating voltage to the elongated member of the tool electrode and to the micromixer tube; a dielectric liquid delivery system configured to deliver a dielectric liquid between the tool electrode and an inner surface of the micromixer tube; and an actuator configured to rotate the tool electrode and move the disk in a trepanning path while maintaining an operative distance of the disk with an inner surface of the micromixer tube to gradually remove the end portion of the micromixer tube.

Another aspect of the disclosure includes any of the preceding aspects, and the outer periphery of the disk is serrated.

Another aspect of the disclosure includes any of the preceding aspects, and the outer periphery of the disk includes a concavity extending inwardly in a radial direction.

Another aspect of the disclosure includes any of the preceding aspects, and at least one of the first side and the second side of the disk is thicker at a radial outer portion thereof adjacent the concavity than at a radial inner portion thereof.

Another aspect of the disclosure includes any of the preceding aspects, and at least one of the first side and the second side of the disk is thicker at a radial outer portion thereof than at a radial inner portion thereof.

Another aspect of the disclosure includes any of the preceding aspects, and the disk includes a dielectric liquid flow passage defined therein.

Another aspect of the disclosure includes any of the preceding aspects, and the disk has an outer diameter in a range of 90% to 95% of an inner diameter of the micromixer tube.

Another aspect of the disclosure includes a method for removing an end portion of a micromixer tube of a combustor, the method comprising: positioning a tool electrode within the end portion of the micromixer tube, the tool electrode including: an elongated member; and a disk having a first side, a second side, an opening in a center thereof, and a slot extending from the first side to the second side and from the opening to an outer periphery of the disk, wherein the elongated member is coupled to the disk and extends through the opening from the first side of the disk and beyond the second side of the disk; rotating the tool electrode while moving the disk in a trepanning path while maintaining an operative distance of the disk from an inner surface of the micromixer tube; applying a dielectric liquid between the tool electrode and the inner surface of the micromixer tube; and repetitively applying voltage to the tool electrode and to the micromixer tube to gradually remove the end portion of the micromixer tube.

Another aspect of the disclosure includes any of the preceding aspects, and further comprising, prior to the rotating while moving, the applying the dielectric liquid and the repetitively applying the voltage, moving an end of the elongated member extending beyond the second side of the disk within the end portion of the micromixer tube to identify a center of the micromixer tube.

Another aspect of the disclosure includes any of the preceding aspects, and the rotating while moving is controlled by a computer numerical control (CNC) system.

Another aspect of the disclosure includes any of the preceding aspects, and the applying the dielectric liquid includes passing the dielectric liquid through a dielectric liquid flow passage defined in the disk.

Another aspect of the disclosure includes any of the preceding aspects, and further comprising: planarizing an end surface of the micromixer tube from which the end portion is removed; and coupling a new end portion onto the end surface of the micromixer tube from which the end portion was removed.

Two or more aspects described in this disclosure, including those described in this summary section, may be combined to form implementations not specifically described herein. That is, all embodiments described herein can be combined with each other.

The details of one or more implementations are set forth in the accompanying drawings and the description below. Other features, objects and advantages will be apparent from the description and drawings, and from the claims.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 shows a schematic view of a gas turbine system with a compressor, a combustor and a turbine;
FIG. 2 shows a perspective view of a prior art micromixer of a combustor that may be repaired using teachings of the disclosure;
FIG. 3 shows a perspective view of a segment of a prior art micromixer of a combustor that may be repaired using teachings of the disclosure;
FIG. 4 shows a simplified top-down view of a plurality of micromixer tubes in a segment of the micromixer of a combustor that may be repaired, according to embodiments of the disclosure;
FIG. 5 shows a simplified perspective view of a plurality of micromixer tubes in a segment of the micromixer of the combustor that may be repaired, according to embodiments of the disclosure;
FIG. 6 shows a side perspective view of a tool electrode for an electrical discharging machine (EDM) system for repairing a micromixer tube of a combustor, according to embodiments of the disclosure;
FIG. 7 shows a side perspective view of a disk of a tool electrode for an EDM system for repairing a micromixer tube of a combustor, according to embodiments of the disclosure;
FIG. 8 shows a top-down view of a disk of a tool electrode for an EDM system for repairing a micromixer tube of a combustor, according to embodiments of the disclosure;
FIG. 9 shows a cross-sectional view of a disk of a tool electrode for an EDM system for repairing a micromixer tube of a combustor, according to embodiments of the disclosure;
FIG. 10 shows a cross-sectional view of a disk of a tool electrode for an EDM system for repairing a micromixer tube of a combustor, according to other embodiments of the disclosure;
FIG. 11 shows a cross-sectional view of a disk of a tool electrode for an EDM system for repairing a micromixer tube of a combustor, according to additional embodiments of the disclosure;
FIG. 12 shows a cross-sectional view of a disk of a tool electrode for an EDM system for repairing a micromixer tube of a combustor, according to embodiments of the disclosure;
FIG. 13 shows a cross-sectional view of a disk of a tool electrode for an EDM system for repairing a micromixer tube of a combustor, according to other embodiments of the disclosure;
FIG. 14 shows a cross-sectional view of a disk of a tool electrode for an EDM system for repairing a micromixer tube of a combustor, according to additional embodiments of the disclosure;
FIG. 15 shows a top-down view of a disk of a tool electrode for an EDM system for repairing a micromixer tube of a combustor, according to other embodiments of the disclosure;
FIG. 16 shows a schematic side view of an EDM system including a tool electrode cutting an end portion from a micromixer tube of a combustor, according to embodiments of the disclosure;
FIG. 17 shows a top-down view of an EDM system including a tool electrode cutting an end portion from a micromixer tube of a combustor, according to embodiments of the disclosure;
FIG. 18 shows a schematic side view of a tool electrode of an EDM system during an optional center-locating step for a micromixer tube of a combustor, according to embodiments of the disclosure;
FIG. 19 shows a side view of a micromixer tube with a damaged end region removed, according to embodiments of the disclosure; and
FIG. 20 shows a side view of a repaired micromixer tube of a combustor, according to embodiments of the disclosure.

It is noted that the drawings of the disclosure are not necessarily to scale. The drawings are intended to depict only typical aspects of the disclosure and therefore should not be considered as limiting the scope of the disclosure. In the drawings, like numbering represents like elements between the drawings.

### DETAILED DESCRIPTION

As an initial matter, in order to clearly describe the subject matter of the current technology, it will become necessary to select certain terminology when referring to and describing relevant machine components within the illustrative application of a gas turbine system and, in particular, a combustor thereof. When doing this, if possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. What may be described herein as being a single part may include and be referenced in another context as consisting of multiple components. Alternatively, what may be described herein as including multiple components may be referred to elsewhere as a single part.

In addition, several descriptive terms may be used regularly herein, and it should prove helpful to define these terms at the onset of this section. These terms and their definitions, unless stated otherwise, are as follows. As used herein, "downstream" and "upstream" are terms that indicate a direction relative to the flow of a fluid, such as the working fluid through the turbomachine or, for example, the flow of dielectric liquid through a micromixer tube. The term "downstream" corresponds to the direction of flow of the fluid, and the term "upstream" refers to the direction opposite to the flow.

It is often required to describe parts that are at different radial positions with regard to a center axis. The term "axial" refers to movement or position parallel to an axis, e.g., an axis of an elongated member of a tool electrode. The term "radial" refers to movement or position perpendicular to an axis, e.g., an axis of disk of a tool electrode for electrical discharge machining. In cases such as this, if a first component resides closer to the axis than a second component, it will be stated herein that the first component is "radially inward" or "inboard" of the second component. If, on the other hand, the first component resides further from the axis than the second component, it may be stated herein that the first component is "radially outward" or "outboard" of the second component. Finally, the term "circumferential" refers to movement or position around an axis. As indicated above, it will be appreciated that such terms may be applied in relation to the axis of a tool electrode.

**In** addition, several descriptive terms may be used regularly herein, as described below. The terms "first," "second," and "third," may be used interchangeably to distinguish one component from another and are not intended to signify location or importance of the individual components.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. "Optional" or "optionally" means that the subsequently described event may or may not occur or that the subsequently described feature may or may not be present and that the description includes instances where the event occurs or the feature is present and instances where the event does not occur or the feature is not present.

Where an element or layer is referred to as being "on," "engaged to," "connected to," "coupled to," or "mounted to" another element or layer, it may be directly on, engaged, connected, coupled, or mounted to the other element or layer, or intervening elements or layers may be present. **In** contrast, when an element is referred to as being "directly on," "directly engaged to," "directly connected to," or "directly coupled to" another element or layer, there are no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items. The verb forms of "couple" and "mount" may be used interchangeably herein.

Embodiments of the disclosure include a tool electrode for an electrical discharge machine (EDM) system for repairing a micromixer tube of a combustor, the EDM system and a related method. The tool electrode includes an elongated member, and a disk coupled to the elongated member. The disk has a first side, a second side, an opening in a center thereof, and a slot extending from the first side to the second side and from the opening to an outer periphery of the disk. The elongated member is coupled to the disk and extends through the opening from the first side of the disk and beyond the second side of the disk. The tool electrode is used to cut a damaged end region from an individual micromixer tube from the inside of the tube using EDM. The systems described herein significantly reduce the physical forces applied and vibration from conventional machining systems to various micromixer tubes, reducing or eliminating damage to braze joints in the micromixer or the tubes thereof. The systems also reduce or eliminate machining debris, such as chips or shavings, which can damage micromixer tubes by, for example, clogging otherwise impeding various flow passages in the micromixer tubes. The systems also allow for micromixer tubes to be repaired individually, thereby minimizing repair time and repair costs. The tool electrode disk is easily replaceable and enables easy variability in geometry and size to increase speed and debris flushing capabilities for any variety of micromixer tubes.

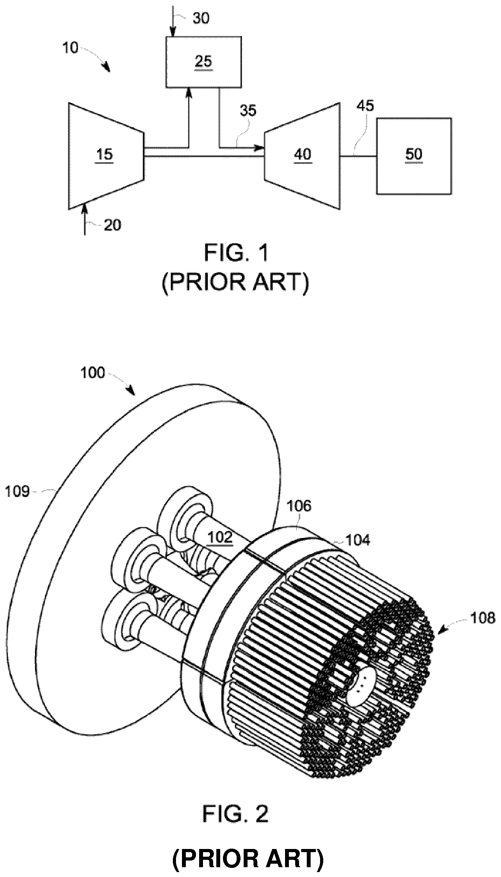

FIG. 1 shows a schematic view of a gas turbine (GT) system 10 that may use a combustor that occasionally requires a micromixer tube repair. GT system 10 may include a compressor 15 that compresses an incoming flow of air 20. Compressor 15 delivers the compressed flow of air 20 to a combustor 25 which mixes the compressed flow of air 20 with a pressurized flow of fuel 30 and ignites the mixture to create a flow of combustion gases 35. Although only a single combustor 25 is shown, GT system 10 may include any number of combustors 25. The flow of combustion gases 35 is in turn delivered to a turbine 40. The flow of combustion gases 35 drives turbine 40 so as to produce mechanical work. The mechanical work produced in turbine 40 drives compressor 15 via a shaft 45 and an external load 50 such as an electrical generator and the like. GT system 10 may use natural gas, various types of syngas, and/or other types of fuels. GT system 10 may be any one of a number of different GT systems offered by GE Vernova of Cambridge, MA, USA, including, but not limited to, those such as a 7 or a 9 series heavy duty GT system and the like. GT system 10 may have different configurations and may use other types of components. Other types of GT systems may also use a micromixer in combustor(s) thereof.

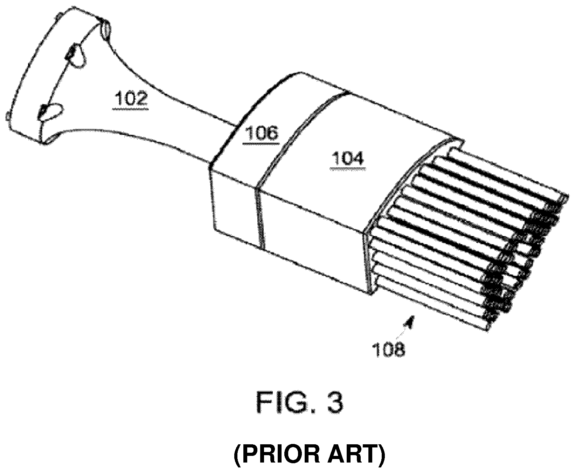

FIGS. 2 and 3 depict a micromixer 100 or a portion thereof used in combustor 25 (FIG. 1). Micromixer 100 may include a base nozzle structure 102 in communication with a fuel plenum 104, an air intake 106, and numerous micromixer tubes 108 forming one or more segmented micromixer tube sets or bundles. Base nozzle structure 102 supplies fuel to fuel plenum 104 which exits fuel plenum 104 and enters micromixer tubes 108. Air is directed into micromixer tubes 108 through air intake 106 and mixes with the fuel to create an air/fuel mixture, which exits micromixer tubes 108 and enters into a downstream combustion chamber. Micromixer tubes 108 may also be referenced as mixing tubes because they function to mix fuel and air.

Still referring to FIGS. 2 and 3, micromixer 100 may be segmented, meaning the micromixer 100 may include a number of base nozzle structures 102. In the segmented micromixer 100, each base nozzle structure 102 is associated with a set or bundle of micromixer tubes 108 that are at least partially supported by base nozzle structure 102. Base nozzle structures 102 may be attached to a combustor endplate 109. During operation of GT system 10 (FIG. 1) and, more particularly, combustor 25 (FIG. 1), micromixer tubes 108 may experience damage such as but not limited to overheating and/or oxidation.

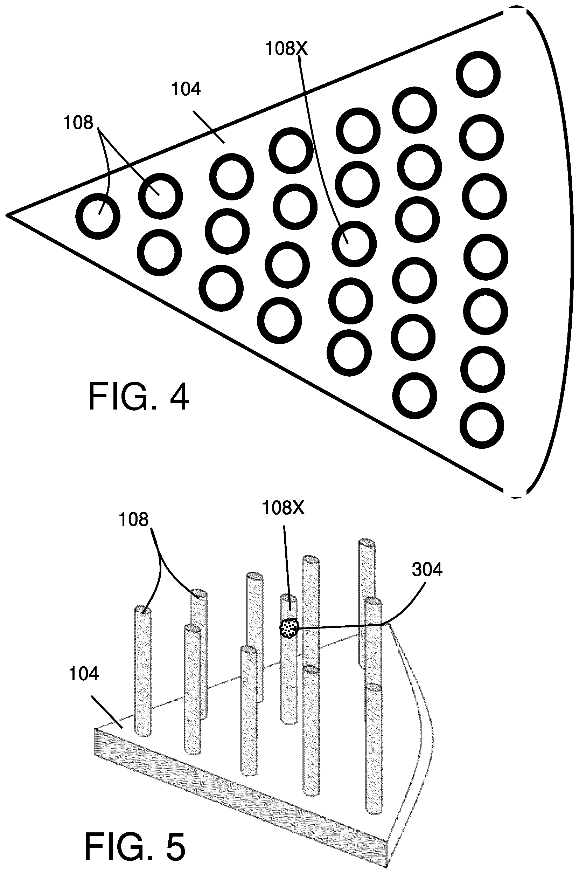

FIG. 4 shows a top-down view and FIG. 5 shows a perspective view of a simplified segment of micromixer tubes 108. (Note, FIGS. 4 and 5 do not show the same number of micromixer tubes 108). FIGS. 4 and 5 show a damaged micromixer tube(s) 108X inward of other, outer micromixer tubes 108. Damaged micromixer tube(s) 108X are not readily repairable without removing or damaging the end portions of the other, outer micromixer tubes 108. Micromixer tubes 108 are tubular members with a diameter, in a non-limiting example, of 12.5 to 25.5 millimeters (mm), and may have a wall thickness in a range of, in a non-limiting example, approximately 2.5 mm. Micromixer tubes 108 are relatively closely spaced. In a non-limiting example, the spacing between micromixer tubes 108 may in a range of 5 to 7.5 mm apart. In any event, it is impossible to position a cutting tool, like a cutting saw or torch, to remove an end region of micromixer tube 108X without damaging neighboring micromixer tubes 108.

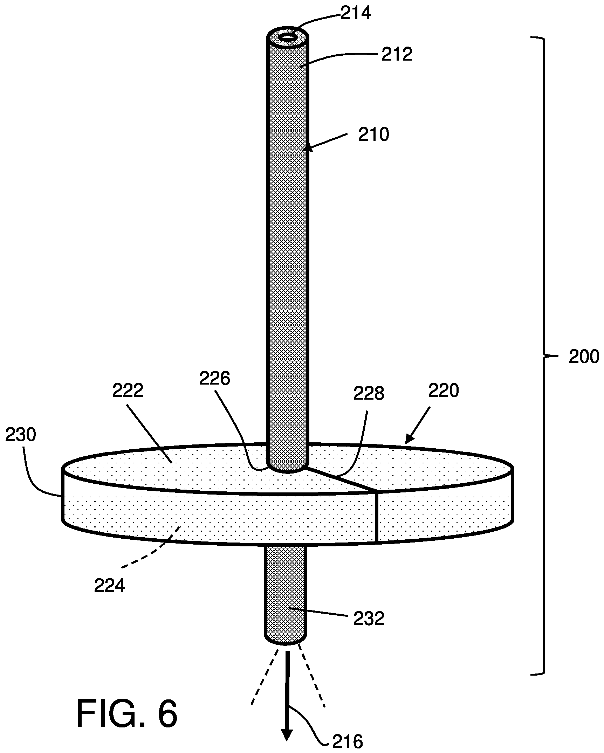

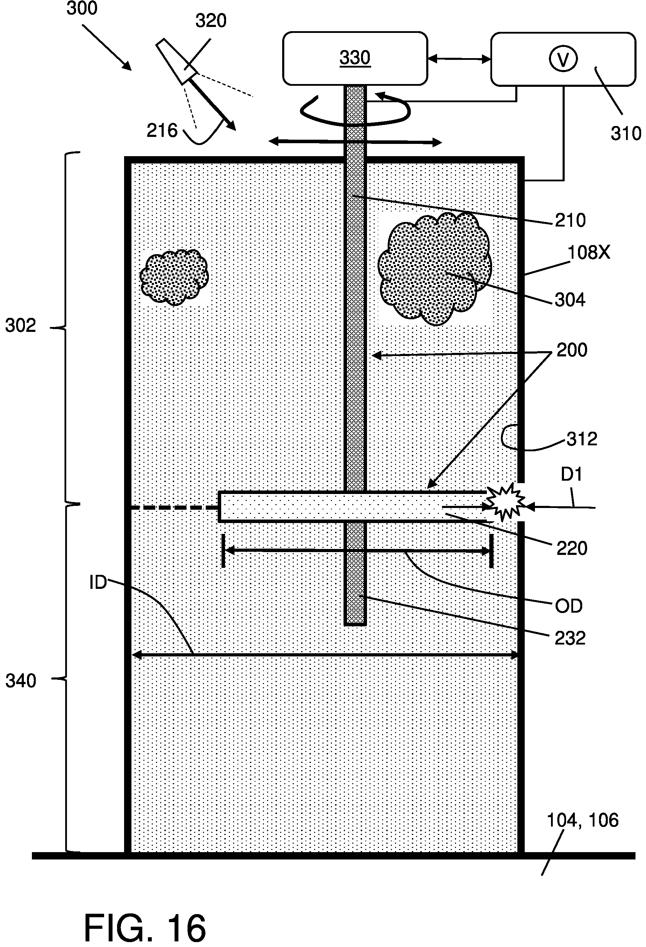

FIG. 6 shows a perspective view of a tool electrode 200 for an electrical discharging machine (EDM) system 300 (FIG. 16) for repairing micromixer tube 108X (FIGS. 4-5) of combustor 25 (FIG. 1) according to embodiments of the disclosure. Electrical discharge machining (EDM) is a metal working technique that creates a desired shape by using electrical discharges, i.e., sparks. EDM may also be recognized as spark eroding or spark machining. In EDM, metal is removed from a workpiece by a series of rapidly recurring electric discharges between a tool electrode and the workpiece (second electrode) that are separated by a dielectric liquid. The tool electrode and workpiece do not contact one another. As will be described, tool electrode 200 is used to cut an end region 302 (FIG. 16) from an individual damaged micromixer tube 108X from within the tube, and without damaging the rest of tube 108X or neighboring tubes 108.

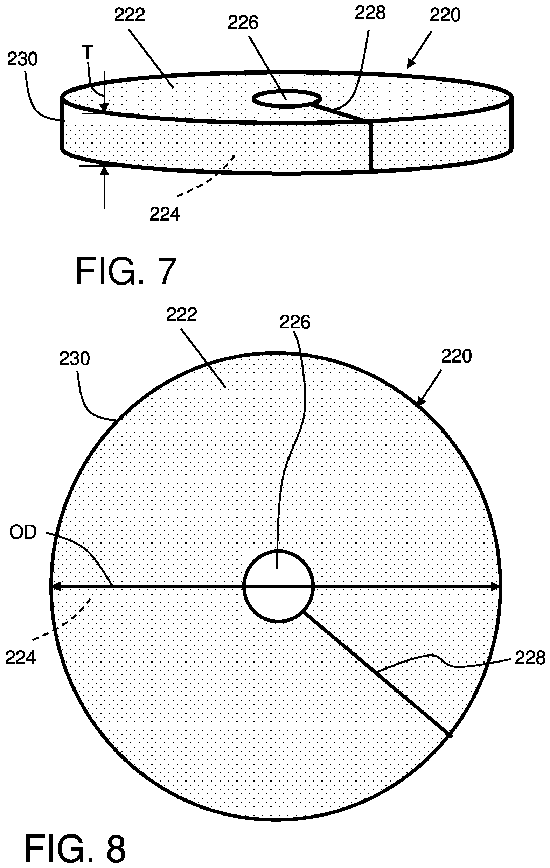

As shown in FIG. 6, tool electrode 200 includes an elongated member 210 and a disk 220. FIG. 7 shows a perspective view of disk 220 with elongated member 210 removed, and FIG. 8 shows a top-down view of disk 220 with elongated member 210 removed, according to embodiments of the disclosure. With brief reference to FIG. 16, and as will be described further herein, tool electrode 200 is used in an EDM process to remove an end portion or tip 302 of micromixer tube 108X from an inner surface 312 thereof. More particularly, tool electrode 200 is placed within a micromixer tube 108X and used to remove end portion 302 using EDM. In this manner, individual micromixer tubes 108 can be repaired without damaging other micromixer tubes.

Returning to FIGS. 6-8, elongated member 210 of tool electrode 200 may include any now known or later developed EDM rod or stick electrode and is configured to couple to a power supply 310 (FIG. 16) of EDM system 300 (FIG. 16) in a known fashion, e.g., electrical wire connection to end 212 of elongated member 210. Elongated member 210 is made of a conductive metal or metal alloy, such as but not limited to copper, brass or carbide. Elongated member 210 may optionally include a flow passage 214 therein to allow passage of a dielectric liquid 216 for EDM in a known fashion. Dielectric liquid 216 may include any now known or later developed dielectric fluid for EDM such as but not limited to: hydrocarbon oil such as transformer oil, paraffin oil or kerosene; lubricating oil; or deionized water or other aqueous solutions.

With continuing reference to FIGS. 6-8, disk 220 is the part of tool electrode 200 that provides the EDM cutting of end region 302 (FIG. 16) of micromixer tube 108X. As will be described, disk 220 is easily replaceable and enables easy variability in geometry and size to increase speed and debris flushing capabilities for any variety of micromixer tubes. Disk 220 has a first side 222 and a second side 224. Disk 220 also includes an outer periphery 230 coupling sides 222, 224. Each side 222, 224 may have a generally circular cross-section. Disk 220 also includes an opening 226 in a center thereof. As will be further described, opening 226 is shaped and/or sized to couple disk 220 to elongated member 210 such that disk 220 extends perpendicularly from elongated member 210. Disk 220 also includes a slot 228 extending from first side 222 to second side 224 and from opening 226 to outer periphery 230 of disk 220. Slot 228 may extend generally radially from opening 226, but it may be non-radial in some cases and/or curved. Disk 220 is made of a conductive metal or metal alloy, such as but not limited to brass, copper, or carbide.

Slot 228 may be used to allow disk 220 to be twisted and slid onto elongated member 210, and then released such that opening 226 grips or couples disk 220 to elongated member 210. In this manner, disk 220 can be fixed to elongated member 210. Slot 228 also allows disk 220 to be easily replaced. Opening 226 may have any cross-sectional shape and/or size to accommodate this type of coupling with elongated member 210. In any event, elongated member 210 may be coupled to disk 220.

As illustrated, in certain embodiments, elongated member 210 may extend through opening 226 from first side 222 of disk 220 and beyond second side 224 of disk 220. That is, at least an (end) portion 232 of elongated member 210 extends beyond second side 224 of disk 220. In this case, collectively, elongated member 210 and disk 220 have an inverted T-shape in a side or cross-sectional view (see e.g., FIG. 16). In other embodiments, not shown, portion 232 may be flush with second side 224 of disk 220. As shown in FIG. 7, a thickness T of disk 220 is defined, at least in part, by outer periphery 230, which may be configured to create a desired thickness of cut into inner surface 312 (FIG. 16) of micromixer tube 108X (FIG. 16). In certain embodiments, disk 220 has a thickness T (FIG. 7) in the range of 0.8 to 1.2 mm, and in other embodiments, disk 220 has a thickness T of approximately 1.0 mm.

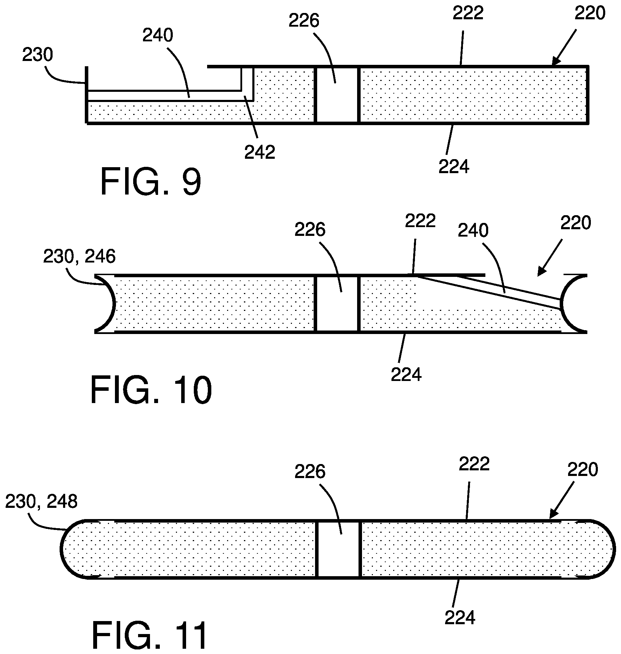

Disk 220 can take a variety of geometric forms and sizes to generate the desired EDM cut on inner surface 312 (FIG. 16) of micromixer tube 108X (FIGS. 4-5, 16) at a desired rate or speed. In FIGS. 6-7, disk 220 has a rectangular cross-section with outer periphery 230 being perpendicular to sides 222, 224 of disk 220. FIGS. 9-15 show cross-sectional or top-down views of alternative embodiments of disk 220 (with elongated member 210 removed). Disk 220 can also have a variety of configurations to increase debris flushing capabilities with dielectric liquid 216. In FIGS. 9 and 10, disk 220 includes one or more dielectric liquid flow passages 240 defined therein. Dielectric liquid flow passage(s) 240 (hereafter "flow passage(s) 240") may take any path through disk 220 to deliver dielectric liquid 216 to a desire location, which is typically a space between outer periphery 230 and inner surface 312 (FIG. 16) of micromixer tube 108X (FIGS. 4-5, 16). In FIGS. 9 and 10, flow passage 240 extends from first side 222 to outer periphery 230 of disk 220. In FIG. 9, flow passage 240 has a turn 242 therein. However, as shown in FIG. 10, flow passage 240 may be linear. Any number of flow passages 240 may be provided in disk 220, and they may have any desired diameter dependent on the type of dielectric liquid 216 (FIGS. 1 and 16) used and a desired flow rate.

In FIG. 10, outer periphery 230 of disk 220 includes a concavity 246 extending inwardly in a radial direction of disk 220, i.e., with an inwardly rounded surface. In FIG. 11, outer periphery 230 of disk 220 includes a convexity 248 extending outwardly in a radial direction of disk 220, i.e., with an outwardly rounded surface. The radius of curvature of concavity 246 or convexity 248 in FIGS. 10 and 11, respectively, can be user defined to obtain the desired EDM cutting of inner surface 312 (FIG. 16) of micromixer tube 108X (FIGS. 4-5, 16.

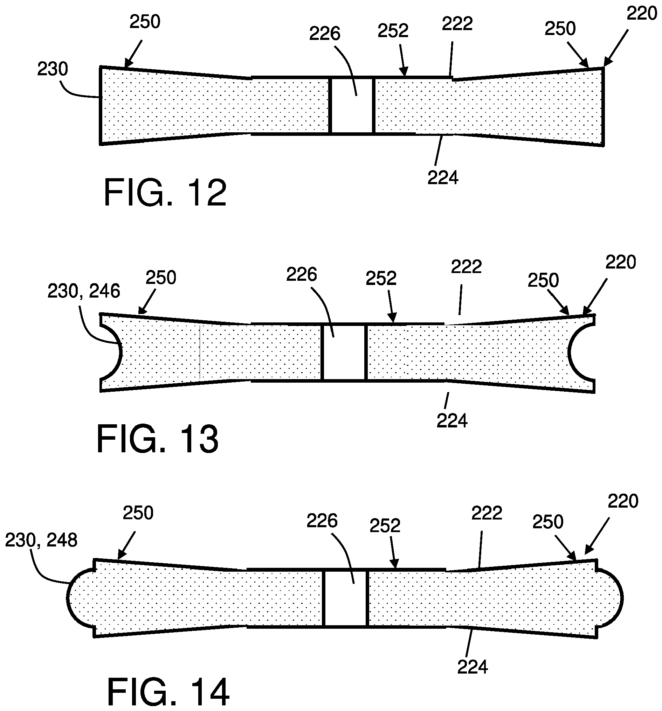

FIGS. 12-14 show embodiments similar to those in FIGS. 9-11, except at least one of first side 222 and second side 224 of disk 220 is thicker at a radial outer portion 250 thereof than at a radial inner portion 252 thereof, e.g., closer to opening 226. In FIG. 12, at least one of first side 222 and second side 224 of disk 220 is thicker at radial outer portion 250 thereof adjacent concavity 246 than at radial inner portion 252 thereof adjacent opening 226. In FIGS. 12-14, both sides 222, 224 are shown thicker at radial outer portion 250, but this is not necessary in all cases, i.e., only one side can be thicker. The thicker areas at radial outer portion 250 can be, for example, individually or collectively if on both sides, 10% thicker than radial inner portion 252.

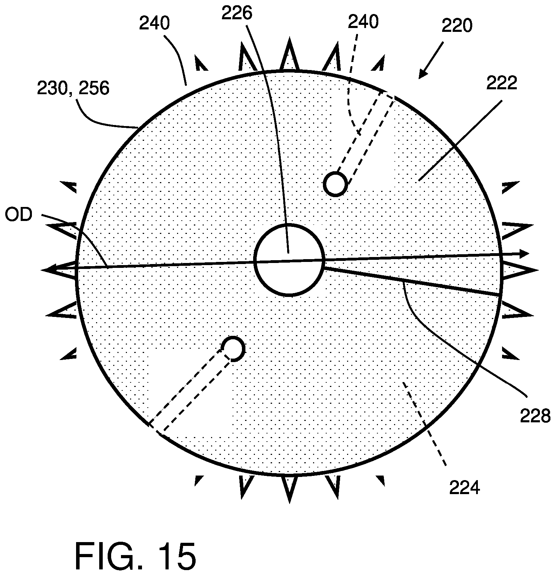

FIG. 15 shows an embodiment in which outer periphery 230 of disk 220 is serrated, i.e., it includes serrations 256. The type of serration can be in any form, e.g., sawtooth, concave, triangular spikes (shown), etc. Serrations 256 can be provided as additional forms of dielectric liquid flow passages 240 to direct dielectric liquid 216 between disk 220 and inner surface of tube 108X. Serrations 256 do not necessarily play a part in the EDM functioning other than dielectric liquid flow. Serrations 256 may be used alone or in combination with flow passage(s) 240 internal to disk 220. FIG. 15, for example, shows both forms of flow passages 240.

Regardless of shape or form, disk 220 is diametrically sized to fit closely into micromixer tube 108X (FIGS. 4-5, 16). In certain embodiments, as shown in FIGS. 8, 15 and 16, disk 220 has an outer diameter (OD) in a range of 90% to 95% of an inner diameter (ID) (FIG. 16) of micromixer tube 108X (FIGS. 4-5, 16). Where serrations 256 are used, as in FIG. 15, the outer diameter OD can be based on the largest outer diameter of disk 220.

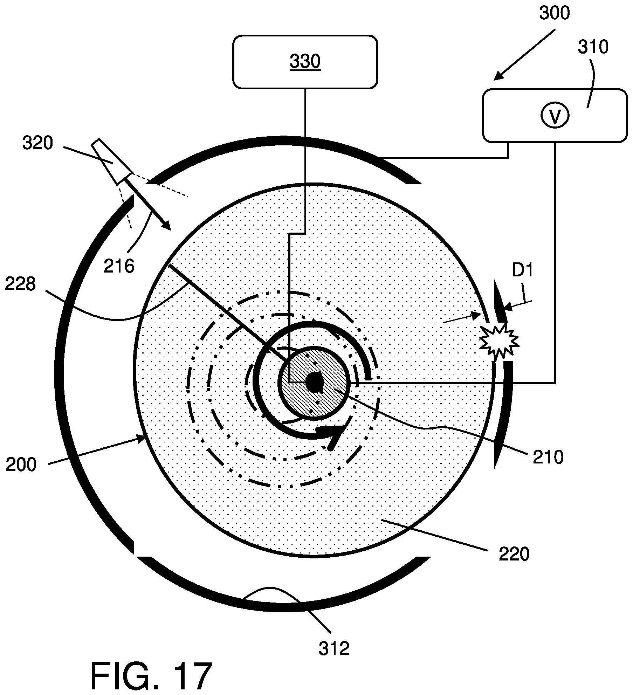

FIG. 16 shows a schematic cross-sectional view and FIG. 17 shows a schematic top-down view of EDM system 300 for removing end portion 302 of micromixer tube 108X of combustor 25 (FIG. 1). End portion 302 may include any form of damage 304, e.g., thinned, oxidized or otherwise damage areas, for which repair is desired. EDM system 300 includes, among other things, tool electrode 200, as described herein. As previously described, tool electrode 200 includes elongated member 210 and disk 220. Disk 220 has first side 222, second side 224, opening 226 in a center thereof, and slot 228 extending from first side 222 to second side 224 and from opening 226 to outer periphery 230 of disk 220. Elongated member 210 is coupled to disk 220 and extends through opening 226 from first side 222 of disk 220 and beyond second side 224 of disk 220.

EDM system 300 also includes a power supply 310 operatively coupled to deliver a repeating voltage to tool electrode 200 and to micromixer tube 108X (second, workpiece electrode). Power supply 310 may include any now known or later developed EDM power supply capable of providing a repeating or recurring current discharge between tool electrode 200 and inner surface 312 of micromixer tube 108X. Any form of electrical connections, e.g., electrical wires and related connectors, may operatively couple power supply 310 to a part of tool electrode 200, e.g., elongated member 210 or other part thereof, and to micromixer tube 108X.

EDM system 300 may also include a dielectric liquid delivery system 320 configured to deliver dielectric liquid 216 between tool electrode 200 and inner surface 312 of micromixer tube 108X. Delivery system 320 may include any form of gravity-feed and/or forced-feed system, e.g., with a pump (not shown). Delivery system 320 may also include a dielectric liquid supply (not shown) such as a reservoir or catch basin, and any necessary conduits such as pipes, hoses and/or nozzles, to deliver dielectric liquid 216 in a desired volume and/or flow rate within micromixer tube 108X. Due to the tight confines within micromixer tube 108X, delivery system 320 may have a relatively small diameter hose positioned in micromixer tube 108X in a manner to not interfere with movement of tool electrode 200. Some of dielectric liquid 216 may flow pass tool electrode 200, but delivery system 320 delivers sufficient volume of dielectric liquid 216 onto and/or around disk 220 to ensure the desired EDM functioning. Where flow passages 240 (FIGS. 9, 10 and 15) are provided, dielectric liquid 216 may flow through those passages for delivery to the desired location.

EDM system 300 also includes an actuator 330 configured to provide two types of motion to tool electrode 200. First, actuator 330 rotates tool electrode 200. That is, actuator 330 rotates tool electrode 200, including elongated member 210 and disk 220, around an axis of elongated member 210 (see circular arrow in FIGS. 16 and 17). Actuator 330 may include any form of rotating actuator, e.g., a motor, engine, etc. In addition, actuator 330 moves disk 220 in a trepanning path (see arrow in FIG. 16 and different circular dashed line paths in FIG. 17). As used herein, a trepanning path indicates a circular path of tool electrode 200, and in particular, outer periphery 230 of disk 220, moves in a gradually increasing diameter, so disk 220 gradually cuts through micromixer tube 108X from its inner surface 312. FIG. 17 shows three dashed circles indicating three sequential paths (inner to outer) that can be used to achieve the trepanning path. Actuator 330 moves disk 220 along the trepanning path while maintaining an operative distance D1 of disk 220 with inner surface 312 of micromixer tube 108X to gradually remove end portion 302 of micromixer tube 108X. As shown in FIG. 16, disk 220 has outer diameter (OD) in a range of 90% to 95% of inner diameter (ID) of micromixer tube 108X, to assist in maintaining operative distance D1 with minimal radial movement of tool electrode 200 to create the trepanning path and address any wear to disk 220. The operative distance D1 can depend on, among other things, the material(s) and geometry of disk 220, the thickness and material(s) of micromixer tube 108X, the desired rate of material removal from micromixer tube 108X, and/or the level of power delivered from power supply 310. In any event, the operative distance D1 may be a range of distances to allow EDM removal of at least a portion of inner surface 312 of micromixer tube 108X. While a manual actuator 330 is possible, actuator 330 typically includes any now known or later developed automated system for moving a tool element in an automated and controlled fashion. In one example, actuator 330 may include any variety of computer numerical control (CNC) actuator. As the function of CNC actuators are well known in the art, no further details are necessary for one with ordinary skill in the art to appreciate how to implement such a system without undue experimentation.

Embodiments of a method for removing end portion 302 of micromixer tube 108X of combustor 25 (FIG. 1) will now be described. As shown in FIGS. 16 and 17, tool electrode 200 is positioned within end portion 302 of micromixer tube 108X. Micromixer tube 108X can be any individual tube of plurality of micromixer tubes 108 (FIGS. 4-5). While micromixer tube 108X is not shown in FIGS. 16-17 with adjacent micromixer tubes 108 (as in FIGS. 4-5) for clarity, it is emphasized that micromixer tube 108X is still in position on its respective segment of micromixer 100 (FIG. 2). That is, micromixer tube 108X is on a segment of fuel plenum 104 and/or air intake 106 as shown in FIGS. 4-5. Tool electrode 200 and, in particular, disk 220 thereof can be inserted to any desired depth to remove any desired length end portion 302.

As shown in FIGS. 16, and 17, actuator 330 rotates tool electrode 200 while moving disk 220 in a trepanning path while maintaining operative distance D1 of disk 220 from inner surface 312 of micromixer tube 108X. As noted, actuator 330 may include a CNC actuator; hence, the rotating while moving may be controlled by the CNC actuator.

The method may also include applying dielectric liquid 216 between tool electrode 200 and inner surface 312 of micromixer tube 108X. The application may be by flowing dielectric liquid 216 into end portion 302 of micromixer tube 108X, allowing dielectric liquid 216 to flow between disk 220 and inner surface 312 by, e.g., gravity. The applying of dielectric liquid 216 may also include passing dielectric liquid 216 through dielectric liquid flow passage(s) 240 defined in (or by) disk 220. That is, dielectric liquid 216 may flow through flow passage(s) 240 defined in disk 220 and/or over any serrations 256 defined by outer periphery 230 of disk 220. **In** operation, dielectric liquid 216 assists in the EDM, greatly reducing if not eliminating the formation of debris. **In** any event, any debris is significantly smaller than those experienced from physical cutting of micromixer tubes, and is easily removed during the EDM process.

As shown in FIGS. 16 and 17, the method also includes repetitively applying voltage to tool electrode 200 and to micromixer tube 108X, e.g., using power supply 310, to gradually remove end portion 302 of micromixer tube 108X. More particularly, as tool electrode 200 rotates, different portions of outer periphery 230 of disk 220 spark with inner surface 312 of micromixer tube 108X to remove part of inner surface 312. The rotation of disk 220 evenly distributes the wear experienced by disk 220 about its outer periphery 230. The trepanning path generated by actuator 330 gradually moves tool electrode 200 outwardly, cutting a bit more of inner surface 312 in each path around inner surface 312 until eventually end portion 302 is no longer coupled to a remaining portion 340 of micromixer tube 108X. The number of EDM passes of disk 220 around inner surface 312 to remove end portion 302 may depend on, among other things, the thickness of micromixer tube 108X, the power used, the speed of rotation of disk 220, and/or the speed of the trepanning path. In one non-limiting example, two to three passes are required. In any event, tool electrode 200 and EDM system 300 significantly reduce the physical forces applied and vibration from conventional machining systems, reducing or eliminating damage to braze joints in micromixer 100 (FIG. 2). Tool electrode 200 and EDM system 300 also reduce or eliminate machining debris, such as chips or shavings, that can damage or clog small cooling passages in micromixer tubes 108.

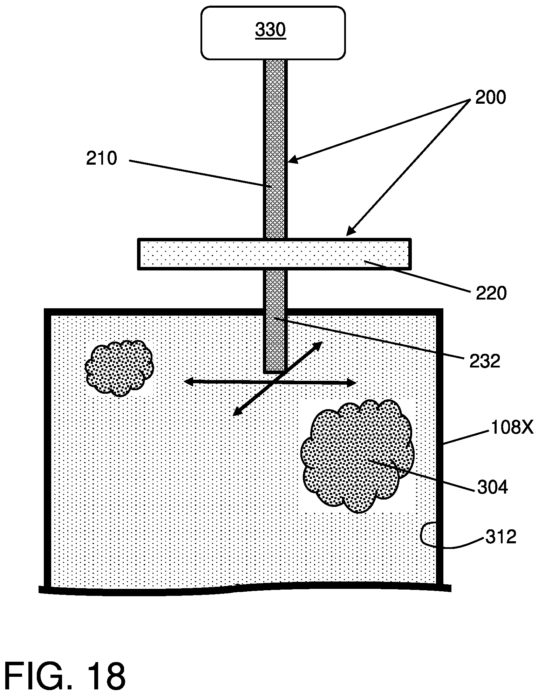

In an optional step, as shown in FIG. 18, prior to the EDM process (i.e., the rotating while moving, the applying the dielectric liquid and the repetitively applying the voltage), end portion 232 of elongated member 210 extending beyond second side 224 of disk 220 may be inserted and moved (see arrows) within end portion 302 of micromixer tube 108X to identify a center of micromixer tube 108X. This step may include moving end portion 302 in different directions to identify inner surface 312 of micromixer tube 108X, and then identify the center thereof, i.e., the center of micromixer tube 108X. That is, this step may be part of determining an X and Y location of a center of micromixer tube 108X by actuator 330 in the form of a CNC actuator. The center location may be used to properly move tool electrode 200 during the EDM process.

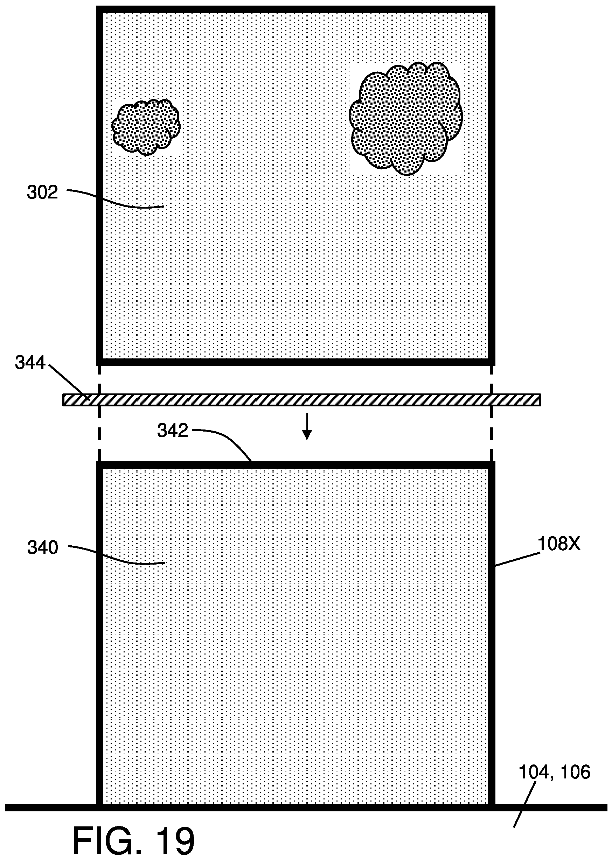

FIG. 19 shows end portion 302 removed from remaining portion 340 of micromixer tube 108X. After end portion 302 is removed, an end surface 342 of remaining portion 340 may not be in a condition to couple a new end portion thereto, e.g., it may be rough, non-planar or otherwise imperfect, for coupling of a replacement tip. In this case, end surface 342 of micromixer tube 108X from which end portion 302 is removed may be planarized, e.g., made flat and smooth or otherwise prepared for coupling of a replacement tip. The planarization can include, among other things, using second side 324 of disk 220 to EDM it smooth (touch EDM), and/or using an abrasive tool on end surface 342. The planarization is shown in a general manner with some version of a planarization tool 344 and an arrow in FIG. 19.

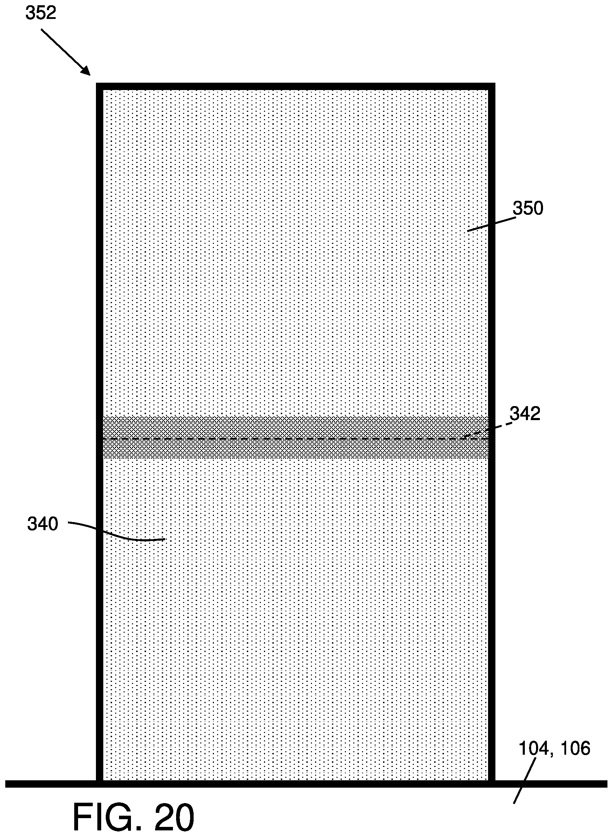

FIG. 20 shows coupling a new end portion or replacement tip 350 onto end surface 342 of micromixer tube 108X from which end portion 302 (FIG. 19) was removed. New end portion 350 can take any form, e.g., a manufactured or refurbished end portion, capable of coupling to remaining portion 340 and operable as part of a repaired micromixer tube 352. New end portion 350 can be bonded to end surface 342 using any joining method(s) appropriate for the material(s) of micromixer tube 352 such as but not limited to welding or brazing.

The above-described method may be repeated for any number of the plurality of micromixer tubes 108 (FIGS. 4-5) for which repair of an end portion 302 is desired.

Embodiments of the disclosure provide various technical and commercial advantages, examples of which are discussed herein. The systems described herein significantly reduce the physical forces applied and vibration from conventional machining systems, reducing or eliminating damage to braze joints in the micromixer. The systems also reduce or eliminate machining debris, such as chips or shavings, that can damage or clog small cooling passages in the micromixer tubes. The systems also allow for micromixer tubes to be repaired individually, thereby minimizing repair time and repair costs. The tool electrode disk is easily replaceable and enables easy variability in geometry and size to increase speed and debris flushing capabilities.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the **precision** of an instrument for measuring the value. Here and throughout the specification and claims, range limitations may be combined and/or interchanged; such ranges are identified and include all the sub-ranges contained therein unless context or language indicates otherwise. "Approximately" or "about," as applied to a particular value of a range, applies to both end values and, unless otherwise dependent on the precision of the instrument measuring the value, may indicate +/- 10% of the stated value(s).

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description but is not intended to be exhaustive or limited to the disclosure in the form disclosed. Many modifications and variations will be apparent to those of ordinary skill in the art without departing from the scope and spirit of the disclosure. The embodiments were chosen and described in order to best explain the principles of the disclosure and the practical application of the technology and to enable others of ordinary skill in the art to understand the disclosure for contemplating various modifications to the present embodiments, which may be suited to the particular use contemplated.

## Claims

1. A tool electrode for an electrical discharging machine (EDM) system for repairing a micromixer tube of a combustor, the tool electrode comprising:
an elongated member; and
a disk having a first side, a second side, an opening in a center thereof, and a slot extending from the first side to the second side and from the opening to an outer periphery of the disk,
wherein the elongated member is coupled to the disk and extends through the opening from the first side of the disk and beyond the second side of the disk.

2. The tool electrode of claim 1, wherein the outer periphery of the disk is serrated, or the outer periphery of the disk includes a concavity extending inwardly in a radial direction.

3. The tool electrode of claim 2, wherein at least one of the first side and the second side of the disk is thicker at a radial outer portion thereof adjacent the concavity than at a radial inner portion thereof, or wherein at least one of the first side and the second side of the disk is thicker at a radial outer portion thereof than at a radial inner portion thereof.

4. The tool electrode of claim 1, wherein the disk includes a dielectric liquid flow passage defined therein.

5. The tool electrode of claim 1, wherein the disk has an outer diameter in a range of 90% to 95% of an inner diameter of the micromixer tube.

6. The tool electrode of claim 1, wherein the elongated member is configured to couple to a power supply of an EDM system.

7. An electrical discharging machine (EDM) system for removing an end portion of a micromixer tube of a combustor, the EDM system comprising:
a tool electrode including:
an elongated member; and
a disk having a first side, a second side, an opening in a center thereof, and a slot extending from the first side to the second side and from the opening to an outer periphery of the disk, wherein the elongated member is coupled to the disk and extends through the opening from the first side of the disk and beyond the second side of the disk;
a power supply operatively coupled to deliver a repeating voltage to the elongated member of the tool electrode and to the micromixer tube;
a dielectric liquid delivery system configured to deliver a dielectric liquid between the tool electrode and an inner surface of the micromixer tube; and
an actuator configured to rotate the tool electrode and move the disk in a trepanning path while maintaining an operative distance of the disk with an inner surface of the micromixer tube to gradually remove the end portion of the micromixer tube.

8. The EDM system of claim 7, wherein the outer periphery of the disk is serrated, or wherein the outer periphery of the disk includes a concavity extending inwardly in a radial direction.

9. The EDM system of claim 8, wherein at least one of the first side and the second side of the disk is thicker at a radial outer portion thereof adjacent the concavity than at a radial inner portion thereof, or wherein at least one of the first side and the second side of the disk is thicker at a radial outer portion thereof than at a radial inner portion thereof.

10. The EDM system of claim 7, wherein the disk includes a dielectric liquid flow passage defined therein.

11. The EDM system of claim 7, wherein the disk has an outer diameter in a range of 90% to 95% of an inner diameter of the micromixer tube.

12. A method for removing an end portion of a micromixer tube of a combustor, the method comprising:
positioning a tool electrode within the end portion of the micromixer tube, the tool electrode including: an elongated member; and a disk having a first side, a second side, an opening in a center thereof, and a slot extending from the first side to the second side and from the opening to an outer periphery of the disk, wherein the elongated member is coupled to the disk and extends through the opening from the first side of the disk and beyond the second side of the disk;
rotating the tool electrode while moving the disk in a trepanning path while maintaining an operative distance of the disk from an inner surface of the micromixer tube;
applying a dielectric liquid between the tool electrode and the inner surface of the micromixer tube; and
repetitively applying voltage to the tool electrode and to the micromixer tube to gradually remove the end portion of the micromixer tube.

13. The method of claim 12, further comprising, prior to the rotating while moving, the applying the dielectric liquid and the repetitively applying the voltage, moving an end of the elongated member extending beyond the second side of the disk within the end portion of the micromixer tube to identify a center of the micromixer tube.

14. The method of claim 12, wherein the rotating while moving is controlled by a computer numerical control (CNC) system.

15. The method of claim 12, wherein the applying the dielectric liquid includes passing the dielectric liquid through a dielectric liquid flow passage defined in the disk.

16. The method of claim 12, further comprising:
planarizing an end surface of the micromixer tube from which the end portion is removed; and
coupling a new end portion onto the end surface of the micromixer tube from which the end portion was removed.
